(19) **Europäisches Patentamt / European Patent Office / Office européen des brevets**

(11) **EP 4 714 721 A1**

(12) # EUROPEAN PATENT APPLICATION

(43) Date of publication:
25.03.2026 Bulletin 2026/13

(51) International Patent Classification (IPC):
**B60L 7/10** *(2006.01)*     **B60L 15/20** *(2006.01)*
**B60L 58/13** *(2019.01)*     **B60L 58/15** *(2019.01)*

(21) Application number: 24202318.2

(22) Date of filing: 24.09.2024

(52) Cooperative Patent Classification (CPC):
**B60L 7/10; B60L 15/2018; B60L 15/2045;
B60L 58/13; B60L 58/15;** B60L 2200/36;
B60L 2240/12; B60L 2240/62; B60L 2240/642;
B60L 2240/68; B60L 2260/50; B60L 2260/52;
B60L 2260/54

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VOLVO TRUCK CORPORATION
405 08 Göteborg (SE)**

(72) Inventors:
• CHAVRIER, Philemon
 38230 TIGNIEU JAMEYZIEU (FR)
• GUGLIELMO, J Francois
 69390 CHARLY (FR)

(74) Representative: **Kransell & Wennborg KB
P.O. Box 2096
403 12 Göteborg (SE)**

(54) **CHARGE CONTROL BASED ON PROBABILITY OF OPERATING A ROUTE**

(57)     The present disclosure relates to a computer system comprising processing circuitry configured to control charging of a high-voltage energy storage system of a vehicle in response to a mean value of a maximum allowable charge levels for downhill slopes having a probability factor comprised in a first set of probability factors.

Fig. 3

**Description**

**TECHNICAL FIELD**

The disclosure relates generally to charge planning. In particular aspects, the disclosure relates to charge control based on probability of operating a route. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

Vehicles with an electric drive train may need to be charged at one or several vehicle charging stations along a route. The route, and/or which vehicle charging station(s) to use, may be determined using a route/charging planning system.

The large weight of an electrified heavy truck vehicle may require certain special reconsiderations when charging an energy storage system of such vehicle compared to e.g. charging a battery of a car. In particular, an upcoming downhill slope may be of such magnitude that the regenerative braking capacity of the vehicle will be exceeded if the state of charge level is too high before entering the downhill slope. There is thus a desire control charging of the energy storage system to enable for e.g. an optimum braking capacity at downhill slope operation.

**SUMMARY**

According to a first aspect of the disclosure, there is provided a computer system comprising processing circuitry configured to control charging of a high-voltage energy storage system of a vehicle, the processing circuitry being configured to obtain slope data for downhill slopes of a plurality of routes positioned within a predetermined distance from a current charging position of the vehicle; estimate a probability factor for each of the downhill slopes of the plurality of routes, the probability factor being a value indicating a likelihood that the vehicle will operate a route after charging is ended; assign a portion of the probability factors into a first set of probability factors; determine a regenerative charge power of an electric traction motor of the vehicle for each of the downhill slopes having a probability factor comprised in the first set of probability factors; determine, for each of the downhill slopes having a probability factor comprised in the first set of probability factors, a maximum allowable charge level of the high-voltage energy storage system at the charging position in response to the respective regenerative charge powers; determine a modified charge level, the modified charge level being a mean value of the maximum allowable charge levels; and control charging of the high-voltage energy storage system at the current charging position to an energy level limited by the modified charge level.

The first aspect of the disclosure may seek to improve the regenerative charge power ability during operation subsequent to charging the high-voltage energy storage system, as well as to improve the operating range for the vehicle after charging is completed. A technical benefit may include that a sufficiently acceptable regenerative charge power ability may be obtained when operating the vehicle at a downhill slope subsequent to charging of the high-voltage energy storage system. Hence, the maximum allowable charge level may be set in response to a charge power ability of the high-voltage energy storage system, i.e. the power level that the energy storage system is able to absorb, and the regenerative charge power generatable at the downhill slope. In further detail, by estimating a probability factor for each of the downhill slopes positioned within the predetermined distance from the current charging position, downhill slopes in the vicinity of the charging position that are more likely than others to be driven after charging can be taken into account when setting the modified charge level. It should thus be readily understood that the modified charge level may in some cases be slightly too high, while in other cases slightly too low. However, if setting a modified charge level in response to one single predicted upcoming road path and subsequently not operating the vehicle along that single predicted upcoming road path, the charge power ability at the actual road path driven by the vehicle may too low and the vehicle may not be able to obtain sufficient brake power. According to another potential situation, setting a modified charge level in response to an identified steepest downhill slope in the vicinity of the charging position may on the other hand result in a substantial reduction in driving range if the vehicle is not operated at that identified steepest downhill slop. Accordingly, the present disclosure enables for a well-balanced solution to obtain good charge power ability at an upcoming downhill slope, as well as providing for an improved operating range for the vehicle.

As defined above, the probability factor is thus a value or ratio defining the likelihood for the plurality of downhill slopes positioned around the charging position. Thus, when the processing circuitry obtains data for the downhill slopes, a value or ratio of the likelihood that the vehicle will operate each of the routes leading to the respective downhill slopes will be given a probability factor. For example, if the processing circuitry identifies four downhill slopes positioned within the predetermined distance from the current charging station, a first downhill slope may have a 40% estimated likelihood of being operated, i.e. the probability factor is estimated to 40%. A second downhill slope may have a 30% estimated probability factor, a third downhill slope may have a 20% estimated probability factor, while the fourth downhill slope may have a 10% estimated probability factor. The first and second downhill slopes may form part of the first set of probability factors and the third and fourth downhill slopes may not form part of the first set of probability factors, but rather form part of a second set of probability factors. Hereby, some routes are less likely to be driven while others are more likely to be driven. The probability factors may hence be assigned into the first and second set of probability factors, where the maximum allowable charge level for the routes with a downhill slope associated with a probability factor in the first set of probability factors are used when setting the modified charge level. It should thus be readily understood that the processing circuitry is unaware of an intended destination for the vehicle. Hence the processing circuitry is not presented with e.g. input from the operator of a desired destination.

Furthermore, the regenerative charge regenerative charge power of the electric traction motor may also relate to a portion of the respective downhill slope. The portion of the respective downhill slope may be a position along the downhill slope at which the electric traction motor has the highest regenerative brake power, i.e. generates the highest level of power to be fed to the high-voltage energy storage system. Still further, the charge level at the current charging position should hence not exceed the modified charge level, i.e. the high-voltage energy should be charge at the current charging position to an energy level to, or below, the modified charge level. Also, the current charging position may be an external charging station. However, the vehicle may comprise a fuel cell generating electric energy that is fed to the high-voltage energy storage system. The current charging position may thus alternatively be an instant position along a route when the fuel cell feeds electric energy to the high-voltage energy storage system.

Optionally in some examples, including in at least one preferred example, the modified charge level is a weighted mean value of the maximum allowable charge levels. A technical benefit may include that an improved accuracy of the modified charge level for the upcoming trip can be obtained.

Optionally in some examples, including in at least one preferred example, a weighing factor is assigned to each one of the reduced maximum charge levels to form the weighted mean value, the weighing factors corresponding to the respective probability factors. A technical benefit may include that a downhill slope associated with a high probability factor is given more weight compared to a downhill slope associated with a lower probability factor, thereby further improving the accuracy of the modified charge level for the upcoming trip. According to the above example, the reduced maximum charge level for the first downhill slope may be assigned a weighing factor of 0,4.

Optionally in some examples, including in at least one preferred example, a remaining portion of the probability factors is assigned into a second set of probability factors, each of the downhill slopes having a probability factor comprised in the second set of probability factors is omitted when the processing circuitry determines a modified charge level. A technical benefit may include that less data can be used and an improved accuracy can be obtained when determining the modified charge level.

Optionally in some examples, including in at least one preferred example, the processing circuitry is further configured to determine a charge power ability of the high-voltage energy storage system when the vehicle arrives at the respective downhill slope for each one of the downhill slopes having a probability factor comprised in the first set of probability factors, determine the maximum allowable charge level of the high-voltage energy storage system at the charging position only in response to the downhill slopes at which the charge power ability is lower than the regenerative charge power. A technical benefit may include that potential upcoming downhill slopes can be neglected even if there is a high probability of operating that downhill slope when it is determined that the high-voltage energy storage system has the ability to absorb the regenerative charge power of the electric traction motor. The computational effort to determine the modified charge level can thus be reduced.

Optionally in some examples, including in at least one preferred example, the charge power ability is determined in response to a level of electric energy consumable by the high-voltage energy storage system from the charging position to a crest of the respective downhill slopes. A technical benefit may include that the consumed energy can be taken into account, which affects the charge power ability of the high-voltage energy storage system.

Optionally in some examples, including in at least one preferred example, the processing circuitry is further configured to determine a total brake power required to obtain a desired vehicle speed during operation at each of the downhill slopes having a probability factor comprised in the first set of probability factors, determine a brake power capability of at least one service brake of the vehicle, and determine the regenerative charge power based at least in part on the brake power capability of the at least one service brake. A technical benefit may include that a brake blending operation of the vehicle may be provided during operation at the downhill slope. Hereby, the risk of overheating the service brakes is reduced while at the same time enabling for optimum charging of the high-voltage energy storage system. A reduction of the temperature level of the service brakes may in turn increase the operational lifetime of the service brakes. Also, by brake blending during the downhill slope, the modified charge level can be set to a higher level during charging, thereby increasing the operational range for the vehicle.

Optionally in some examples, including in at least one preferred example, the probability factors comprised in the first set of probability factors comprises a probability factor above a predetermined threshold level. According to an example, the probability factors comprised in the first set of probability factors may be higher compared to the probability factors comprised in the second set of probability factors.

Optionally in some examples, including in at least one preferred example, the slope data is obtained from at least one of a global navigation system, map data, and a memory comprising stored slope data associated with the charging position. A technical benefit may include that accurate topographic data of the surroundings of the current charging position can be obtained.

Optionally in some examples, including in at least one preferred example, routes leading to at least one of a city and a highway have a probability factor comprised in the first set of probability factors. Routes leading to these positions are more likely to be operated after charging and may therefore be assigned a probability factor to be comprised in the first set of probability factors. It should however be understood that routes leading to a city may be assigned a different probability factor compared to a route leading to a highway.

Optionally in some examples, including in at least one preferred example, routes leading to at least one of a dead end and a small communal road have a probability factor not forming part of the first set of probability factors. Preferably, such routes are comprised in the second set of probability factors. A technical benefit may include that these types of routes can be neglected as it is less likely that they will be operated after charging at the current charging position is completed.

According to a second aspect, there is provided a vehicle comprising the computer system of any one of the examples described above in relation to the first aspect.

According to a third aspect, there is provided a computer implemented method of controlling charging of a high-voltage energy storage system of a vehicle, the method comprising obtaining, by a processing circuitry of a computer system, slope data for downhill slopes of a plurality of routes positioned within a predetermined distance from a current charging position of the vehicle; estimating, by the processing circuitry, a probability factor for each of the downhill slopes of the plurality of routes, the probability factor being a value indicating a likelihood that the vehicle will operate a route after charging is ended; assigning, by the processing circuitry, a portion of the probability factors in a first set of probability factors; determining, by the processing circuitry, a regenerative charge power of an electric traction motor of the vehicle for each of the downhill slopes having a probability factor comprised in the first set of probability factors; determining, by the processing circuitry, for each of the downhill slopes having a probability factor comprised in the first set of probability factors, a maximum allowable charge level of the high-voltage energy storage system at the charging position in response to the respective regenerative charge powers; determining, by the processing circuitry, a modified charge level, the modified charge level being a mean value of the maximum allowable charge levels; and controlling, by the processing circuitry, charging of the high-voltage energy storage system at the current charging position to an energy level limited by the modified charge level.

The third aspect of the disclosure may seek to improve the regenerative charge power ability during operation subsequent to charging the high-voltage energy storage system, as well as to improve the operating range for the vehicle after charging is completed. A technical benefit may include that a sufficiently acceptable regenerative charge power ability may be obtained when operating the vehicle at a downhill slope subsequent to charging of the high-voltage energy storage system. In further detail, by estimating a probability factor for each of the downhill slopes positioned within the predetermined distance from the current charging position, downhill slopes in the vicinity of the charging position that are more likely than others to be driven after charging can be taken into account when setting the modified charge level. It should thus be readily understood that the modified charge level may in some cases be slightly too high, while in other cases slightly too low. However, if setting a modified charge level in response to one single predicted upcoming road path and subsequently not operating the vehicle along that single predicted upcoming road path, the charge power ability at the actual road path driven by the vehicle may too low and the vehicle may not be able to obtain sufficient brake power. According to another potential situation, setting a modified charge level in response to an identified steepest downhill slope in the vicinity of the charging position may on the other hand result in a substantial reduction in driving range if the vehicle is not operated at that identified steepest downhill slop. Accordingly, the present disclosure enables for a well-balanced solution to obtain good charge power ability at an upcoming downhill slope, as well as providing for an improved operating range for the vehicle.

Optionally in some examples, including in at least one preferred example, the method further comprises determining, by the processing circuitry, a charge power ability of the high-voltage energy storage system when the vehicle arrives at the respective downhill slope for each of the downhill slopes having a probability factor comprised in the first set of probability factors, determining, by the processing circuitry, the maximum allowable charge level of the high-voltage energy storage system at the charging position only in response to the downhill slopes at which the charge power ability is equal to, or higher, than the regenerative charge power. A technical benefit may include that potential upcoming downhill slopes can be neglected even if there is a high probability of operating that downhill slope when it is determined that the high-voltage energy storage system has the ability to absorb the regenerative charge power of the electric traction motor. The computational effort to determine the modified charge level can thus be reduced.

Optionally in some examples, including in at least one preferred example, the charge power ability is determined in response to a level of electric energy consumable by the high-voltage energy storage system from the charging position to a crest of the respective downhill slopes. A technical benefit may include that the consumed energy can be taken into account, which affects the charge power ability of the high-voltage energy storage system.

Optionally in some examples, including in at least one preferred example, the method further comprises determining, by the processing circuitry, a total brake power required to obtain a desired vehicle speed during operation at each of the downhill slopes having a probability factor comprised in the first set of probability factors, determining, by the processing circuitry, a brake power capability of at least one service brake of the vehicle, and determining, by the processing circuitry, the regenerative charge power based at least in part on the brake power capability of the at least one service brake. A technical benefit may include that a brake blending operation of the vehicle may be provided during operation at the downhill slope. Hereby, the risk of overheating the service brakes is reduced while at the same time enabling for optimum charging of the high-voltage energy storage system. A reduction of the temperature level of the service brakes may in turn increase the operational lifetime of the service brakes. Also, by brake blending during the downhill slope, the modified charge level can be set to a higher level during charging, thereby increasing the operational range for the vehicle.

Optionally in some examples, including in at least one preferred example, the method comprising obtaining, by the processing circuitry, the slope data from at least one of a global navigation system, map data, and a memory comprising stored slope data associated with the charging position. A technical benefit may include that accurate topographic data of the surroundings of the current charging position can be obtained.

Optionally in some examples, including in at least one preferred example, the method further comprises: assigning, by the processing circuitry, routes leading to at least one of a city and a highway as forming part of the first set of probability factors, and assigning, by the processing circuitry, routes leading to at least one of a dead end and a small communal road as forming part of a second set of probability factors. Routes leading to a city or a highway are more likely to be operated after charging and may therefore be assigned a probability factor to be comprised in the first set of probability factors, while routes leading to a dead end or a small communal road can be neglected as it is less likely that they will be operated after charging at the current charging position is completed. It should however be understood that routes leading to a city may be assigned a different probability factor compared to a route leading to a highway.

According to a fourth aspect, there is provided a computer program product comprising program code for performing, when executed by the processing circuitry, the method of any of the examples described above in relation to the third aspect.

According to a fifth aspect, there is provided a non-transitory computer-readable storage medium comprising instructions, which when executed by the processing circuitry, cause the processing circuitry to perform the method of any of the examples described above in relation to the third aspect.

Further effects and features of the second, third, fourth and fifth aspects are largely analogous to those described above in relation to the first aspect. Features of any aspect is applicable and combinable with any other aspect of the present disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

Fig. 1 is an exemplary illustration of a vehicle according to an example,
Fig. 2 is an exemplary graph illustrating a relationship between charge level and charge power ability of a high-voltage energy storage system according to an example,
Fig. 3 is an exemplary illustration of a schematic presentation of routes arranged at a distance from a current charging position according to an example,
Fig. 4 is an exemplary illustration of downhill slopes within a predetermined distance from a current charging position according to an example,
Fig. 5 is an exemplary flow chart of a method of controlling charging of a high-voltage energy storage system, and
Fig. 6 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

The following disclosure aims at providing a solution which improves the braking capability for a vehicle at least partly propelled by an electric traction motor, which electric traction motor is operable to generate electric power during braking. A technical benefit may include that a sufficiently acceptable regenerative charge power ability may be obtained when operating the vehicle at a downhill slope subsequent to charging of a high-voltage energy storage system.

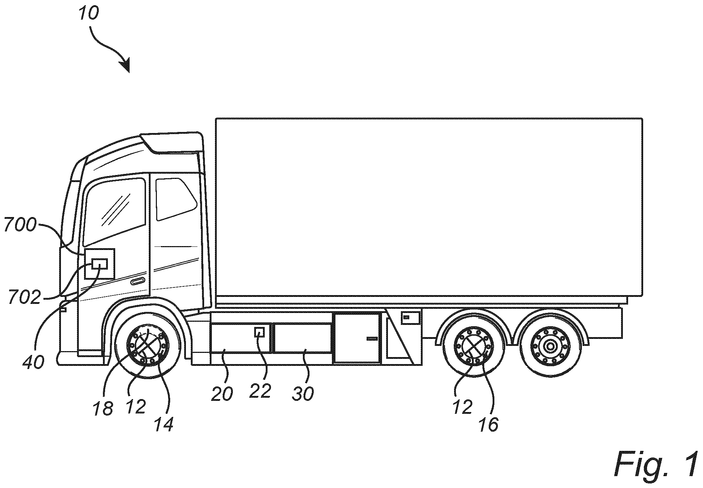

Turning to Fig. 1 which is an exemplary illustration of a vehicle 10 according to an example. The exemplified vehicle 10 is configured to be at least partly propelled by one or more electric traction motors 12. In Fig. 1, the electric traction motors 12 are exemplified as wheel hub motor connected to the pair of front wheels 14 as well as to the foremost pair of rear wheels 16. However, the vehicle 10 may alternatively comprises a single electric traction motor connected to the wheels via a conventional propulsion shaft (not shown). The at least one electric traction motor 12 is configured to apply a propulsive power to the wheels of the vehicle during propulsion, and to generate electric power during braking.

The vehicle further comprises a high-voltage energy storage system 20, also referred to as a high-voltage vehicle battery. The high-voltage energy storage system 20 is configured to feed electric power to the electric traction motor 12 during propulsion of the vehicle 10 and to receive electric power during braking. The high-voltage energy storage system 20 can be charged externally at a charge socket 22. In further detail, the high-voltage energy storage system 20 can be charge at a charging station by attaching a charge plug of a charging cable to the charge socket 22.

According to a non-limiting example, the vehicle 10 may also comprise a fuel cell 30 configured to generate electric energy, which electric energy can be fed to the high-voltage energy storage system 20 during operation of the vehicle 10, or when the vehicle 10 is standing still. Such fuel cell 30 preferably generates electric energy during a chemical reaction of hydrogen and oxygen. Thus, the vehicle 10 preferably comprises a gas tank (not shown) comprising hydrogen to be fed to the fuel cell. Hence, the high-voltage energy storage system 20 can be charged while the vehicle 10 is being driven.

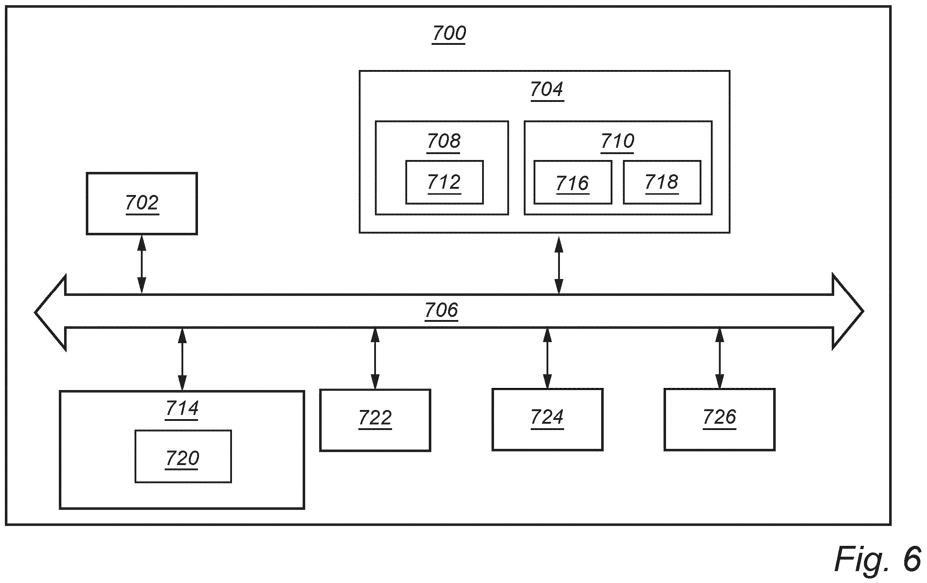

Furthermore, the vehicle 10 also comprises a computer system 700. The computer system 700 comprises processing circuitry 702 which, amongst other things, is configured to control a charge level of the high-voltage energy storage system 20 either when the vehicle 10 is stationary and charged at a charging station and/or when the high-voltage energy storage system 20 is charge by electric power generated by the fuel cell 30 when the vehicle 10 is driven. Exemplified details of the computer system 700 and the processing circuitry 702 will be given below in relation to the description of Fig. 6.

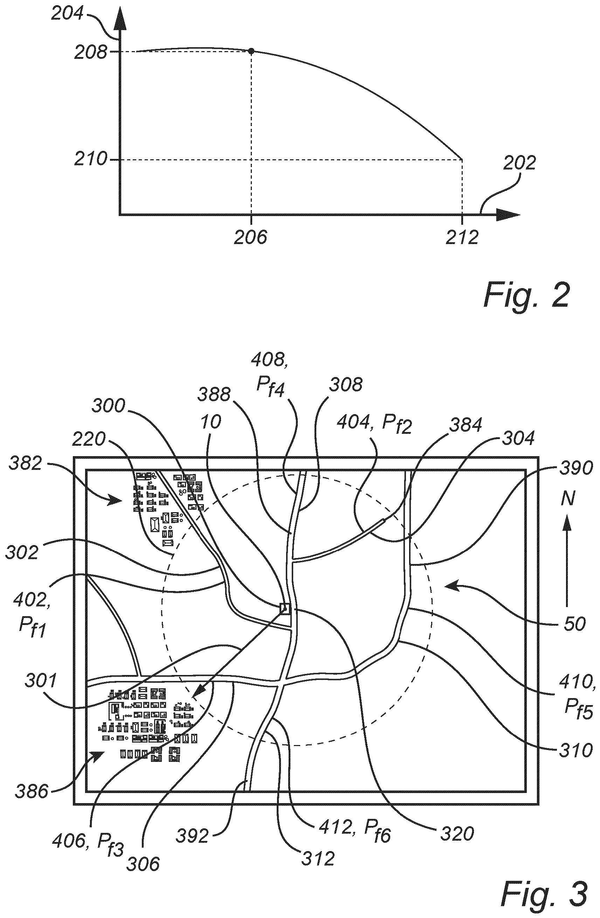

During charging of the high-voltage energy storage system 20 by electric power generated by the electric traction motor 12, the high-voltage energy storage system 20 may be susceptible to different levels of charge power in dependency of its current charge level. This is in the following referred to as the charge power ability of the high-voltage energy storage system 20. With particular reference to Fig. 2, which is an exemplary graph illustrating a relationship between charge level and charge power ability of the high-voltage energy storage 20system according to an example.

In Fig. 2, the abscissa indicates the charge level 202 of the energy storage system 20 and the ordinate indicates the charge power ability 204 of the energy storage system 20. As exemplified in Fig. 2, the charge power ability 204 is continuously reduced from a predetermined or pre-set charge level 206 of the high-voltage energy storage system 20. Thus, for a charge level 202 below the predetermined or pre-set charge level 206, the high-voltage energy storage system 20 can absorb a maximum level of charge power, which maximum level can vary from energy storage system to energy storage system. Thus, below the predetermined or pre-set charge level 206, the charge power ability 204 is at a maximum charge power ability 208. For a charge level 202 higher than the predetermined or pre-set charge level 206, the charge power ability 204 is reduced. Accordingly, by reducing the charge level 202, the charge power ability 204 is increased. The charge power ability 204 is exemplified as being continuously reduced until reaching a minimum level of charge power ability 210 at a predetermined maximum charge level 212. The predetermined maximum charge level 212 may be slightly before the high-voltage energy storage system 20 is fully charged. It should however be readily understood, although not depicted in Fig. 2, that the charge power ability 204 may be reduced to a preset limit when the charge level 202 exceeds the predetermined or pre-set charge level 206, i.e. a step wise reduction to a lower charge power ability level which is the same between the predetermined or pre-set charge level 206 and the predetermined maximum charge level 212.

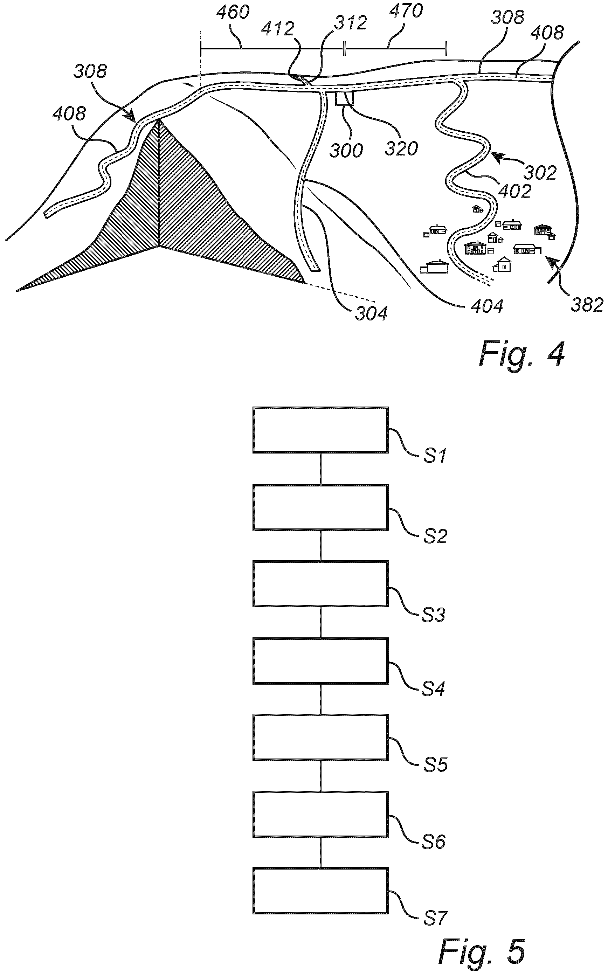

The following will, with reference to Figs. 3 - 5 now describe a method of controlling charging of the high-voltage energy storage system 20 according to an example. The method will be described in relation to charging the high-voltage energy storage system 20 externally at a charging station 300 positioned at a charging position 320 but should be construed as also applicable for a hybrid vehicle as well as when charging the high-voltage energy storage system 20 by electric power from the above described fuel cell 30 when the vehicle is driven. In the latter example, the charging position 320 is the current position of the vehicle 10 when the high-voltage energy storage system 20 is charged by electric power from the fuel cell 30. Fig. 3 is an exemplary illustration of a schematic presentation of a plurality of routes positioned within a predetermined distance from the charging station 300 according to an example, Fig. 4 is an exemplary illustration of downhill slopes 402, 404 within the predetermined distance from the charging station 300 according to an example, and Fig. 5 is an exemplary flow chart of a method of controlling charging of the high-voltage energy storage system 20. In Fig. 3, the north direction N of the schematic presentation is indicated.

Before the high-voltage energy storage system 20 is charged with electric power at the charging station 300, the processing circuitry 702 obtains S1 data for downhill slopes of a plurality of routes positioned within a predetermined distance 301 from a current charging position 320 of the vehicle. The processing circuitry 702 thus obtains data of the downhill slopes 402, 404, 406, 408, 410, 412 of a plurality of routes 302, 304, 306, 308 310, 312 arranged within an area 220 defined by the predetermined distance 301 from the charging position 320. The predetermined distance 301 can thus be construed as a predetermined radius from the charging position 320. The data of the downhill slopes 402, 404, 406, 408, 410, 412 may, for example, be distance of the respective downhill slope, inclination of the respective downhill slope, speed limit of the respective downhill slope, etc. The slope data may also define a destination that the route containing the slope is leading to. As a non-limiting example, the slope data may indicate if the route leads to a city, a highway, a communal road, a dead end, etc. As a non-limiting example, the slope data may be obtained from at least one of a global navigation system 40, map data 50, and a memory comprising stored slope data associated with the charging position.

The processing circuitry 702 thereafter estimates S2 a probability factor $Pf_1$, $Pf_2$, $Pf_3$, $Pf_4$, $Pf_5$, $Pf_6$ for each of the downhill slopes 402, 404, 406, 408, 410, 412 of the plurality of routes 302, 304, 306, 308, 310, 312. Thus, for each road, a likelihood that the vehicle will operate a route after charging is ended is estimated. In the exemplified Fig. 3, the first route 302 leads to a first city 382, the second route 304 leads to a dead end 384, the third route 306 leads to a second city 386, the fourth route 308 leads to a highway 388, the fifth route 310 leads to a small communal road 390, and the sixth route 312 leads to a highway 392. It may thus be more probable that the vehicle will be operating one of the first 302, third 306, fourth 308 and the sixth 312 route after charging is completed compared to operating the second 304 or fifth 310 route. The processing circuitry 702 assigns S3 a portion of the probability factors $Pf_1$, $Pf_2$, $Pf_3$, $Pf_4$, $Pf_5$, $Pf_6$ into a first set of probability factors. According to the above example, the first $Pf_1$, third $Pf_3$, fourth $Pf_4$ and sixth $Pf_6$ may form part of the first set of probability factors. A remining portion of the probability factors is, according to the example, assigned into a second set of probability factors. In the exemplification, the second $Pf_2$ and fifth $Pf_5$ may form part of the second set of probability factors. Hence, the probability factors comprised in the first set of probability factors may be higher compared to the probability factors comprised in the second set of probability factors. The probability factors may be preset in response to e.g. the destination or type of road. In detail, a route leading to a city may have a pre-set or predetermined probability factor, while a route leading to a dead end may have another pre-set or predetermined probability factor. As a complement or as an alternative, the probability factor may be set in response to different possible destinations or road types operable from the charging station. For example, if there are only two possible routes to be driven within the predetermined distance from the charging station, the processing circuitry may evaluate these two and set a probability factor based on a comparison. In a similar vein, if there are three possible routes to be driven within the predetermined distance from the charging station, the processing circuitry may evaluate these three and set a probability factor based on a comparison. The total sum should hence not exceed 100%. Further, if there are e.g. two highways within the predetermined distance from the charging station, these may be differentiated based on e.g. history data of previous operation by the vehicle. In detail, if the vehicle has driven along a first highway a number of times, and along a second highway a less number of times, the first highway may be assigned a higher probability factor compared to the second highway.

By assigning, or dividing, the probability factors $Pf_1$, $Pf_2$, $Pf_3$, $Pf_4$, $Pf_5$, $Pf_6$ into the first and second sets of probability factors, the downhill slopes having a probability factor that form part of the second set of probability factors may be omitted by the processing circuitry 702 when further determining a modified charge level at the charging station 320 as will be described further below. Instead, the processing circuitry 702 determines S4 a regenerative charge power of the electric traction motor 12 of the vehicle 10 for each of the downhill slopes 402, 406, 408, 412 having a probability factor comprised in the first set of probability factors. Hence, a first regenerative charge power of the electric traction motor is determined for the first downhill slope 402, a second regenerative charge power of the electric traction motor is determined for the third downhill slope 406, etc. The regenerative charge power of the electric traction motor 12 is dependent on, for example, the inclination (for example a mean inclination along the distance of the downhill slope) of the respective downhill slope, the distance of the downhill slope, a speed limit of the downhill slope. These parameters may additionally be combined with the weight of the vehicle 10, which weight may affect the regenerative charge power generatable by the electric traction motor 12.

Furthermore, the processing circuitry 702 also determines S5 a maximum allowable charge level of the high-voltage energy storage system 20 at the charging position for each of the downhill slopes having a probability factor comprised in the first set of probability factors, i.e. the first 402, third 406, fourth 408 and sixth 412 downhill slopes in the above example. Each of the maximum allowable charge levels is set in response to the corresponding regenerative charge power of the electric traction motor 12 of the respective downhill slopes. Preferably, maximum allowable charge level at the charging station 320 may be set such that the charge power ability of the high-voltage energy storage system 20 is higher than, or equal to, the regenerative charge power for the particular downhill slope. In further detail, the high-voltage energy storage system 20 should be able to absorb the regenerative charge power from the electric traction motor. As described above in relation to Fig. 2, the charge power ability of the high-voltage energy storage system 20 varies as a function of the charge level.

When the processing circuitry 702 has determined a maximum allowable charge level for each of the downhill slopes 402, 406, 408, 412 having a probability factor comprised in the first set of probability factor, the processing circuitry 702 determines S6 a modified charge level. In particular, the modified charge level is a mean value of the maximum allowable charge levels each of the downhill slopes 402, 406, 408, 412 having a probability factor comprised in the first set of probability factor. The below identified Equation 1 can be used for determining the modified charge level, using the above example that the first 402, third 406, fourth 408 and sixth 412 downhill slope have a probability factor comprised in the first set of probability factors.

$$E_{Mod} = \frac{E_{Max1} + E_{Max3} + E_{Max4} + E_{Max6}}{4} \qquad (Eq.1)$$

Where:

$E_{Mod}$ = Modified charge level.
$E_{max1}$ = Maximum charge level for the first downhill slope.
$E_{max3}$ = Maximum charge level for the third downhill slope.
$E_{max4}$ = Maximum charge level for the fourth downhill slope.
$E_{max6}$ = Maximum charge level for the sixth downhill slope.

According to a further example, the modified charge level may be a weighed mean value of the above described maximum allowable charge levels. Hence, a weighing factor can be assigned to each one of the maximum allowable charge levels. Hereby, a downhill slope with a high probability to be driven can be given a higher weight. According to an example, the weighing factors may be the above described probability factors. The below identified Equation 2 can be used for determining the modified charge level when assigning a weighing factor to each of the maximum allowable charge levels, again using the above example that the first 402, third 406, fourth 408 and sixth 412 downhill slope have a probability factor comprised in the first set of probability factors.

$$E_{Mod} = \frac{P_{f1}E_{Max1} + P_{f3}E_{Max3} + P_{f4}E_{Max4} + P_{f6}E_{Max6}}{4} \qquad (Eq.2)$$

Where:

$P_{f1}$ = First probability factor.
$P_{f3}$ = Third probability factor.
$P_{f4}$ = Fourth probability factor.
$P_{f6}$ = Sixth probability factor.

Furthermore, in the exemplified illustration of Fig. 4, the downhill slope 402 of a first route 302 is initiated at a first distance 460 from the charging position 300 and the downhill slope 404 of a second route 304 is initiated at a second distance 470 from the charging station 300. The first 460 and second 470 distances are thus within the area 220 defined by the predetermined distance 301. The processing circuitry 702 may hereby determine a charge power ability of the high-voltage energy storage system 20 when the vehicle arrives at the respective downhill slope for each one of the downhill slopes having a probability factor comprised in the first set of probability factors. The maximum allowable charge level of the high-voltage energy storage system at the charging position may here be determined only in response to the downhill slopes at which the charge power ability is lower than the regenerative charge power. Hence, if it is determined that a maximum charge level at the charging station will not cause the high-voltage energy storage system to have a too high charge level when arriving at one or more of the downhill slopes, the maximum charge level can be determined to be 100% state of charge and can be omitted when subsequently determining the maximum allowable charge level. The charge power ability of electric energy consumable by the high-voltage energy storage system from the charging position to a crest of the respective downhill slopes. In Fig. 4, only the distance to the first 402 and fourth 408 downhill slopes are illustrated for simplifying for the skilled reader. It should however be understood that the distance to the third 406 and sixth 412 downhill slopes may also be determined.

Furthermore, the above described charge power of the electric traction motor may be the brake power required by the electric traction motor 12 to obtain a desired vehicle speed. As an alternative, the regenerative charge power may be a brake contribution by the electric traction motor 12 in a brake blending operation to obtain a desired vehicle speed. In the latter example, the processing circuitry 702 can be configured to determine a total brake power required to obtain the desired vehicle speed during operation of the portion of the downhill slope 402, 404. The processing circuitry 702 may further be configured to determine a brake power capability of at least one service brake (18 in Fig. 1) of the vehicle 10, and to determine a regenerative charge power of the electric traction motor 12 at least in part on the brake power capability of the at least one service brake. For example, the regenerative charge power of the electric traction motor 12 may be set as a difference between the total brake power and the brake power capability of the at least one service brake. The desired vehicle speed may be a predefined vehicle speed at the downhill slop, such as e.g. a legislative speed limit of the downhill slope.

FIG. 6 is a schematic diagram of a computer system 700 for implementing examples disclosed herein. The computer system 700 is adapted to execute instructions from a computer-readable medium to perform these and/or any of the functions or processing described herein. The computer system 700 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include processing circuitry 702 (e.g., processing circuitry including one or more processor devices or control units), a memory 704, and a system bus 706. The computer system 700 may include at least one computing device having the processing circuitry 702. The system bus 706 provides an interface for system components including, but not limited to, the memory 704 and the processing circuitry 702. The processing circuitry 702 may include any number of hardware components for conducting data or signal processing or for executing computer code stored in memory 704. The processing circuitry 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 702 may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processing circuitry 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with processing circuitry 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program 720 stored on a transitory or non-transitory computer-usable or computer-readable storage medium (e.g., single medium or multiple media), such as the storage device 714, which includes complex programming instructions (e.g., complex computer-readable program code) to cause the processing circuitry 702 to carry out actions described herein. Thus, the computer-readable program code of the computer program 720 can comprise software instructions for implementing the functionality of the examples described herein when executed by the processing circuitry 702. In some examples, the storage device 714 may be a computer program product (e.g., readable storage medium) storing the computer program 720 thereon, where at least a portion of a computer program 720 may be loadable (e.g., into a processor) for implementing the functionality of the examples described herein when executed by the processing circuitry 702. The processing circuitry 702 may serve as a controller or control system for the computer system 700 that is to implement the functionality described herein.

The computer system 700 may include an input device interface 722 configured to receive input and selections to be communicated to the computer system 700 when executing instructions, such as from a keyboard, mouse, touch-sensitive surface, etc. Such input devices may be connected to the processing circuitry 702 through the input device interface 722 coupled to the system bus 706 but can be connected through other interfaces, such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may include a communications interface 726 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

## EXAMPLE LIST

Example 1: A computer system comprising processing circuitry configured to control charging of a high-voltage energy storage system of a vehicle, the processing circuitry being configured to: obtain slope data for downhill slopes of a plurality of routes positioned within a predetermined distance from a current charging position of the vehicle; estimate a probability factor for each of the downhill slopes of the plurality of routes, the probability factor being a value indicating a likelihood that the vehicle will operate a route after charging is ended; assign a portion of the probability factors into a first set of probability factors; determine a regenerative charge power of an electric traction motor of the vehicle for each of the downhill slopes having a probability factor comprised in the first set of probability factors; determine, for each of the downhill slopes having a probability factor comprised in the first set of probability factors, a maximum allowable charge level of the high-voltage energy storage system at the charging position in response to the respective regenerative charge powers; determine a modified charge level, the modified charge level being a mean value of the maximum allowable charge levels; and control charging of the high-voltage energy storage system at the current charging position to an energy level limited by the modified charge level.

Example 2. The computer system according to example 1, wherein the modified charge level is a weighted mean value of the maximum allowable charge levels.

Example 3. The computer system according to example 2, wherein a weighing factor is assigned to each one of the reduced maximum charge levels to form the weighted mean value, the weighing factors corresponding to the respective probability factors.

Example 4. The computer system according to any one of the preceding examples, wherein a remaining portion of the probability factors is assigned into a second set of probability factors, wherein each of the downhill slopes having a probability factor comprised in the second set of probability factors is omitted when the processing circuitry determines a modified charge level.

Example 5. The computer system according any one of the preceding examples, wherein the processing circuitry is further configured to: determine a charge power ability of the high-voltage energy storage system when the vehicle arrives at the respective downhill slope for each one of the downhill slopes having a probability factor comprised in the first set of probability factors, determine the maximum allowable charge level of the high-voltage energy storage system at the charging position only in response to the downhill slopes at which the charge power ability is lower than the regenerative charge power.

Example 6. The computer system according to example 5, wherein the charge power ability is determined in response to a level of electric energy consumable by the high-voltage energy storage system from the charging position to a crest of the respective downhill slopes.

Example 7. The computer system according to any one of the preceding examples, wherein the processing circuitry is further configured to: determine a total brake power required to obtain a desired vehicle speed during operation at each of the downhill slopes having a probability factor comprised in the first set of probability factors, determine a brake power capability of at least one service brake of the vehicle, and determine the regenerative charge power based at least in part on the brake power capability of the at least one service brake.

Example 8. The computer system according to any one of the preceding examples, wherein the probability factors comprised in the first set of probability factors comprises a probability factor above a predetermined threshold level.

Example 9. The computer system according to any one of the preceding examples, wherein the slope data is obtained from at least one of a global navigation system, map data, and a memory comprising stored slope data associated with the charging position.

Example 10. The computer system according to any one of the preceding examples, wherein routes leading to at least one of a city and a highway have a probability factor comprised in the first set of probability factors.

Example 11. The computer system according to any one of the preceding examples, wherein routes leading to at least one of a dead end and a small communal road have a probability factor not forming part of the first set of probability factors.

Example 12. A vehicle comprising the computer system of any one of the preceding examples.

Example 13. A computer implemented method of controlling charging of a high-voltage energy storage system of a vehicle, the method comprising: obtaining, by a processing circuitry of a computer system, slope data for downhill slopes of a plurality of routes positioned within a predetermined distance from a current charging position of the vehicle; estimating, by the processing circuitry, a probability factor for each of the downhill slopes of the plurality of routes, the probability factor being a value indicating a likelihood that the vehicle will operate a route after charging is ended; assigning, by the processing circuitry, a portion of the probability factors into a first set of probability factors and a second set of probability factors; determining, by the processing circuitry, a regenerative charge power of an electric traction motor of the vehicle for each of the downhill slopes having a probability factor comprised in the first set of probability factors; determining, by the processing circuitry, for each of the downhill slopes having a probability factor comprised in the first set of probability factors, a maximum allowable charge level of the high-voltage energy storage system at the charging position in response to the respective regenerative charge powers; determining, by the processing circuitry, a modified charge level, the modified charge level being a mean value of the maximum allowable charge levels; and controlling, by the processing circuitry, charging of the high-voltage energy storage system at the current charging position to an energy level limited by the modified charge level.

Example 14. The method according to example 13, further comprising: determining, by the processing circuitry, a charge power ability of the high-voltage energy storage system when the vehicle arrives at the respective downhill slope for each of the downhill slopes having a probability factor comprised in the first set of probability factors, determining, by the processing circuitry, the maximum allowable charge level of the high-voltage energy storage system at the charging position only in response to the downhill slopes at which the charge power ability is equal to, or higher, than the regenerative charge power.

Example 15. The method according to example 14, wherein the charge power ability is determined in response to a level of electric energy consumable by the high-voltage energy storage system from the charging position to a crest of the respective downhill slopes.

Example 16. The method according to any one of examples 13 - 15, further comprising: determining, by the processing circuitry, a total brake power required to obtain a desired vehicle speed during operation at each of the downhill slopes having a probability factor comprised in the first set of probability factors, determining, by the processing circuitry, a brake power capability of at least one service brake of the vehicle, and determining, by the processing circuitry, the regenerative charge power based at least in part on the brake power capability of the at least one service brake.

Example 17. The method according to any one of examples 13 - 16, comprising: obtaining, by the processing circuitry, the slope data from at least one of a global navigation system, map data, and a memory comprising stored slope data associated with the charging position.

Example 18. The method according to any one of examples 13 - 18, further comprising: assigning, by the processing circuitry, routes leading to at least one of a city and a highway as forming part of the first set of probability factors, and assigning, by the processing circuitry, routes leading to at least one of a dead end and a small communal road as forming part of a second set of probability factors.

Example 19. A computer program product comprising program code for performing, when executed by the processing circuitry, the method of any of examples 13-18.

Example 20. A non-transitory computer-readable storage medium comprising instructions, which when executed by the processing circuitry, cause the processing circuitry to perform the method of any of examples 13-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising processing circuitry (702) configured to control charging of a high-voltage energy storage system (20) of a vehicle (10), the processing circuitry being configured to:

   - obtain slope data for downhill slopes of a plurality of routes positioned within a predetermined distance (301) from a current charging position (320) of the vehicle;
   - estimate a probability factor ($Pf_1$, $Pf_2$, $Pf_3$, $Pf_4$, $Pf_5$, $Pf_6$) for each of the downhill slopes of the plurality of routes, the probability factor being a value indicating a likelihood that the vehicle will operate a route after charging is ended;
   - assign a portion of the probability factors into a first set of probability factors;
   - determine a regenerative charge power of an electric traction motor of the vehicle for each of the downhill slopes having a probability factor comprised in the first set of probability factors;
   - determine, for each of the downhill slopes having a probability factor comprised in the first set of probability factors, a maximum allowable charge level of the high-voltage energy storage system at the charging position in response to the respective regenerative charge powers;
   - determine a modified charge level, the modified charge level being a mean value of the maximum allowable charge levels; and
   - control charging of the high-voltage energy storage system at the current charging position to an energy level limited by the modified charge level.

2. The computer system according to claim 1, wherein the modified charge level is a weighted mean value of the maximum allowable charge levels.

3. The computer system according to claim 2, wherein a weighing factor is assigned to each one of the reduced maximum charge levels to form the weighted mean value, the weighing factors corresponding to the respective probability factors.

4. The computer system according to any one of the preceding claims, wherein a remaining portion of the probability factors is assigned into a second set of probability factors, wherein each of the downhill slopes having a probability factor comprised in the second set of probability factors is omitted when the processing circuitry determines a modified charge level.

5. The computer system according any one of the preceding claims, wherein the processing circuitry is further configured to:

- determine a charge power ability of the high-voltage energy storage system when the vehicle arrives at the respective downhill slope for each one of the downhill slopes having a probability factor comprised in the first set of probability factors,
- determine the maximum allowable charge level of the high-voltage energy storage system at the charging position only in response to the downhill slopes at which the charge power ability is lower than the regenerative charge power.

6. The computer system according to claim 5, wherein the charge power ability is determined in response to a level of electric energy consumable by the high-voltage energy storage system from the charging position to a crest of the respective downhill slopes.

7. The computer system according to any one of the preceding claims, wherein the processing circuitry is further configured to:

- determine a total brake power required to obtain a desired vehicle speed during operation at each of the downhill slopes having a probability factor comprised in the first set of probability factors,
- determine a brake power capability of at least one service brake of the vehicle, and
- determine the regenerative charge power based at least in part on the brake power capability of the at least one service brake.

8. The computer system according to any one of the preceding claims, wherein the probability factors comprised in the first set of probability factors comprises a probability factor above a predetermined threshold level.

9. The computer system according to any one of the preceding claims, wherein the slope data is obtained from at least one of a global navigation system, map data, and a memory comprising stored slope data associated with the charging position.

10. The computer system according to any one of the preceding claims, wherein routes leading to at least one of a city and a highway have a probability factor comprised in the first set of probability factors.

11. The computer system according to any one of the preceding claims, wherein routes leading to at least one of a dead end and a small communal road have a probability factor not forming part of the first set of probability factors.

12. A vehicle comprising the computer system of any one of the preceding claims.

13. A computer implemented method of controlling charging of a high-voltage energy storage system of a vehicle, the method comprising:

- obtaining (S 1), by a processing circuitry of a computer system, slope data for downhill slopes of a plurality of routes positioned within a predetermined distance from a current charging position of the vehicle;
- estimating (S2), by the processing circuitry, a probability factor for each of the downhill slopes of the plurality of routes, the probability factor being a value indicating a likelihood that the vehicle will operate a route after charging is ended;
- assigning (S3), by the processing circuitry, a portion of the probability factors into a first set of probability factors;
- determining (S4), by the processing circuitry, a regenerative charge power of an electric traction motor of the vehicle for each of the downhill slopes having a probability factor comprised in the first set of probability factors;
- determining (S5), by the processing circuitry, for each of the downhill slopes having a probability factor comprised in the first set of probability factors, a maximum allowable charge level of the high-voltage energy storage system at the charging position in response to the respective regenerative charge powers;
- determining (S6), by the processing circuitry, a modified charge level, the modified charge level being a mean value of the maximum allowable charge levels; and
- controlling (S7), by the processing circuitry, charging of the high-voltage energy storage system at the current charging position to an energy level limited by the modified charge level.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.

*Fig. 1*

EP 4 714 721 A1

Fig. 2

Fig. 3

Fig. 4

Fig. 5

*Fig. 6*

## EUROPEAN SEARCH REPORT

**Application Number**

EP 24 20 2318

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 10 2016 102825 A1 (FORD GLOBAL TECH LLC [US]) 25 August 2016 (2016-08-25) <br> * paragraphs [0001], [0044], [0046], [0049] * <br> * figures 1, 8 * <br> ----- | 1-15 | INV. <br> B60L7/10 <br> B60L15/20 <br> B60L58/13 <br> B60L58/15 |
| Y | US 2019/283593 A1 (KOEBLER MARTIN [DE] ET AL) 19 September 2019 (2019-09-19) <br> * paragraphs [0015], [0065], [0066], [0067], [0097] * <br> * figure 3A * <br> ----- | 1-15 | |

**TECHNICAL FIELDS SEARCHED (IPC)**

B60L

The present search report has been drawn up for all claims

| Place of search | Date of completion of the search | Examiner |
|---|---|---|
| The Hague | 17 March 2025 | Wirth, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 2318

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2025

| Patent document cited in search report | Publication date | Patent family member(s) | Publication date |
|---|---|---|---|
| DE 102016102825 A1 | 25-08-2016 | CN 105905107 A<br>DE 102016102825 A1<br>US 2016243958 A1 | 31-08-2016<br>25-08-2016<br>25-08-2016 |
| US 2019283593 A1 | 19-09-2019 | NONE | |

EPO FORM P0459

For more details about this annex : see Official Journal of the European Patent Office, No. 12/82